# EUROPÄISCHE PATENTSCHRIFT

(11) **EP 1 624 760 B1**
(45) Veröffentlichungstag und Bekanntmachung des Hinweises auf die Patenterteilung: **09.05.2007**
(21) Anmeldenummer: 04730854.9
(22) Anmeldetag: 03.05.2004
(51) Int. Cl.: A22C 13/00

(54) **RAUCH- UND WASSERDAMPFDURCHLÄSSIGE NAHRUNGSMITTELHÜLLE AUS THERMOPLASTISCHEM GEMISCH MIT EINEM NATÜRLICHEN ERSCHEINUNGSBILD**
SMOKE- AND STEAM-PERMEABLE FOOD SKIN MADE FROM A THERMOPLASTIC MIXTURE WITH A NATURAL APPEARANCE
BOYAU ALIMENTAIRE D'ASPECT NATUREL CONSTITUE D'UN MELANGE THERMOPLASTIQUE, PERMEABLE A LA FUMEE ET A LA VAPEUR D'EAU

(30) Priorität: 06.05.2003 DE 10320327
(43) Veröffentlichungstag der Anmeldung: 15.02.2006
(73) Patentinhaber: Kalle GmbH, 65203 Wiesbaden (DE)
(72) Erfinder: STALBERG, Stefanie, 65232 Taunusstein-Wehen (DE); DELIUS, Ulrich, 60529 Frankfurt (DE); FERON, Bernhard, 65189 Wiesbaden (DE); DELIUS, Ulrich, 60529 Frankfurt (DE)
(74) Vertreter: Plate, Jürgen
(86) Internationale Anmeldenummer: PCT/EP2004/004646
(87) Internationale Veröffentlichungsnummer: WO 2004/098298

(56) Entgegenhaltungen:
- WO-A-94/16020
- WO-A-02/094023
- WO-A-03/073861
- WO-A-20/04065466

## Beschreibung

Die vorliegende Erfindung betrifft eine ein- oder mehrschichtige, schlauchförmige, unverstreckte, mono- oder biaxial orientierte (und thermofixierte) Nahrungsmittelhülle aus einem thermoplastischen Gemisch, das mindestens ein aliphatisches Polyamid und/oder Copolyamid und mindestens ein oder mehrere synthetische wasserlösliche Polymere und mindestens einen organischen und/oder anorganischen Füllstoff umfaßt. Aufgrund ihrer hohen Wasserdampfdurchlässigkeit eignet sie sich insbesondere als künstliche Wursthülle für Rohwurstsorten

Nahrungsmittelhüllen, speziell Wursthüllen, werden aus Naturdarm, Textil-, Faser- oder Cellulosedarm, Kollagen oder Kunststoff hergestellt. Der Kollagen- bzw. Hautfaserdarm zeichnet sich zwar durch eine natürliche Oberfläche und eine angenehme Haptik aus, wird aber nach einem sehr aufwendigen und umweltbelastenden Verfahren aus Rinderhäuten hergestellt. Das Hautgewebe wird mit Säuren (z. B. Milchsäure) bis zu den Fibrillen aufgeschlossen; die hochviskose Masse wird extrudiert und mit gasförmigem Ammoniak oder Ammoniumhydroxid langsam und kompakt ausgefällt und verfestigt. Beim Trocknen erfolgt dann eine Vernetzung (Härtung), um den Produkten eine ausreichende Stabilität zu verleihen, so daß sie den Brühprozeß ohne wesentlichen Festigkeitsverlust überstehen. Naturdärme wie auch Hautfaserdärme werden jedoch aufgrund verschiedener Vorfälle, wie der BSE-Seuche bei Rindern und dem Mißbrauch von Antibiotika, von den Endverbrauchern zunehmend weniger akzeptiert. Es drohen außerdem gesetzliche Beschränkungen. Eine Alternative zu den genannten Därmen ist daher wünschenswert. Cellulosedärme, selbst solche mit Faserverstärkung, können diese Aufgabe nur eingeschränkt übernehmen. Auch das Herstellverfahren ist nicht weniger aufwendig und umweltschädigend als das Kollagenverfahren.

Nahrungsmittelhüllen auf Basis synthetischer Polymere können hingegen eine echte Alternative darstellen. Diese sind über ein kombiniertes Extrusions- und Blasformverfahren sehr einfach, kostengünstig und hygienisch einwandfrei herstellbar. Allerdings konnten sich reine Kunststoffhüllen aufgrund ihrer unnatürlichen, glatten und glänzenden Oberfläche nicht im Marktbereich für Kollagen- bzw. Naturdarm durchsetzen. Sie können zudem nur wenig Wasser speichern und zeigen nur eine geringe Durchlässigkeit für Wasserdampf, die für Rohwurstanwendungen nicht ausreicht, da dort ein gewisser Abtrocknungsgrad erzielt werden muß. Bei der Salamireifung ist beispielsweise ein Gewichtsverlust von etwa 23 bis 26 % nach 10 Reifetagen üblich, was hochpermeable Hüllen voraussetzt. Weiterhin lassen herkömmliche Kunststoffhüllen keinen Kaltrauch (ca. 20 - 35 °C) und nur geringe Mengen Heißrauch (ca. 70 - 80 °C) durch. Die Kalträucherung ist bei Rohwurstsorten jedoch ein Standardverfahren.

Folien aus wasserlöslichen Polymeren, wie Polyvinylalkohol und Naturstoffen, beispielsweise Stärke, sind zahlreich beschrieben. In der US-A 5 322 866 ist eine biologisch abbaubare Polyvinylalkohol-Stärke-Folie offenbart, die allerdings keine Wasserbeständigkeit zeigt. Eine verbesserte Wasserresistenz läßt sich durch Zusatz eines Vernetzers oder durch Beschichten der Folie mit wasserabweisenden Substanzen erzielen (US-A 5 106 890).

Weitaus wenigerfeuchteanfällig sind Blends aus wasserbeständigen, synthetischen Polymeren, z. B. Polyamiden und wasserlöslichen Polymeren, denen ggf. noch Naturstoffe beigemischt werden. Ein Vernetzer ist in diesen Fällen in der Regel nicht mehr nötig, da die wasserunlösliche Matrix die feuchtigkeitsempfindlichen Substanzen weitgehend von Ihrer Umgebung abschirmt.

So werden in der WO 94/16020 bioabbaubare Blends aus zwei Polymeren beschrieben, von denen jedes für sich bereits biologisch abbaubar ist. Als erstes Polymer werden u.a. auch Polyamid (PA), als zweite Komponente u.a. Polyvinylalkohol (PVAL), Polylactid und andere aliphatische Polyester genannt. Optional kann zusätzlich ein Polysaccharid beigemischt sein. Aus den aus den genannten Blends hergestellten Artikeln löst sich bei der Extraktion mit Wasser der Polyvinylalkoholanteil, so daß - unter dem Elektronenmikroskop sichtbar - eine hochporöse, schwammähnliche Oberfläche resultiert. Ein solches Material ist daher ungeeignet für den Einsatz von Folien zur Umhüllung feuchter Lebensmittel.

In der US-A 4 611 019 sind Blends aus thermoplastischem Polyvinylalkohol und einem kleinen Anteil Polyamid oder Polyester beschrieben, welche gegenüber reinem Polyvinylalkohol den Vorteil einer hohen Gasbarriere bei niedrigen und insbesondere bei erhöhten Feuchten aufweisen sollen.

Im vorgenannten Stand der Technik spielt die Permeation von (Rauch-)Gasen und Wasserdampf keine Rolle oder ist sogar unerwünscht. Meist steht die biologische Abbaubarkeit im Vordergrund. Natürliches Aussehen und angenehme Haptik sind dabei zweitrangig.

In der WO 02/078455 wird ein thermoplastisches System aus Polyamid und wasserlöslichen Polymeren im Zusammenhang mit gut räucherfähigen Nahrungsmittelhüllen offenbart. Der Zusatz einer Naturstoffkomponente (als Füllstoff oder in thermoplastifizierter Form) oder eines anorganischen Füllstoffes ist nicht zwingend erforderlich. Aufgrund ihrer unnatürlichen, glatten und glänzenden Oberfläche konnten sich derartige Kunststoffhüllen nicht im Marktbereich für Kollagen- bzw. Natur- oder Faserdarm durchsetzen.

Aufgabe der Erfindung ist es deshalb, eine echte Alternative zum Kollagen-, Natur- oder Faserdarm zu finden, die die Nachteile des Standes der Technik vermeidet. Vor allem soll sie sich durch ein besonders natürliches Erscheinungsbild und eine angenehme Haptik auszeichnen und dabei dem Kollagen-, Natur- und Faserdarm zum Verwechseln ähnlich sehen. Eine solche Nahrungsmittelhülle soll auch ohne Nachvernetzung wasserfest sein, d.h. unter Einwirkung von (heißem) Wasser keinen Übergang des wasserlöslichen Polymers in die Umgebung zeigen. Sie soll zersetzungsfrei extrudierbar und zu Schlauchfolien verarbeitbar sein sowie hohe Rauch- und Wasserdampfdurchlässigkeiten besitzen, die über die Rezeptur in weiten Grenzen gezielt eingestellt werden können.

Gelöst wurde die Aufgabe durch eine ein- oder mehrschichtige Nahrungsmittelhülle aus einem thermoplastischen Gemisch, das mindestens ein aliphatisches Polyamid und/oder Copolyamid und mindestens ein oder mehrere synthetische(s) wasserlösliche(s) Polymer(e) enthält und dadurch gekennzeichnet ist, daß das thermoplastische Gemisch mindestens einen organischen und/oder anorganischen Füllstoff umfaßt, wobei die Hülle eine Wasserdampfdurchlässigkeit, bestimmt gemäß DIN 53122, im unverstreckten, im monoaxial oder biaxial verstreckten Zustand von 50 bis 1.500 g/m²·d aufweist. Die Wasserdampfdurchlässigkeit der unverstreckten oder monoaxial verstreckten Hülle beträgt vorzugsweise 100 bis 1.200 g/m²·d, besonders bevorzugt 125 bis 1.100 g/m²·d, speziell 150 bis 1.000 g/m²·d, ganz besonders 175 bis 900 g/m²·d, insbesondere 200 bis 800, vor allem 225 bis 700 g/m²·d oder sogar 250 bis 600 g/m²·d. Die Wasserdampfdurchlässigkeit der biaxial verstreckten Hülle beträgt bevorzugt 100 bis 1.200 m²·d, besonders bevorzugt 125 bis 1.100 g/m²·d, speziell 150 bis 1.000 g/m²·d, ganz besonders 175 bis 900 g/m²·d, insbesondere 200 bis 800 g/m²·d, vor allem 225 bis 700 g/m²·d und sogar 250 bis 600 g/m²·d.

Die Hülle gemäß der Erfindung zeichnet sich durch ein besonders natürliches Erscheinungsbild und eine angenehme Haptik aus und sieht dabei dem Kollagen-, Natur- und Faserdarm zum Verwechseln ähnlich. Eine solche Nahrungsmittelhülle ist auch ohne Nachvernetzung wasserfest, d.h. unter Einwirkung von (heißem) Wasserzeigt sie keinen Übergang des wasserlöslichen Polymers in die Umgebung. Sie ist zersetzungsfrei extrudierbar und zu Schlauchfolien verarbeitbar und besitzt hohe Rauch- und Wasserdampfdurchlässigkeiten, die über die Rezeptur in weiten Grenzen gezielt eingestellt werden können.

Bevorzugte (Co-)Polyamide dieser Art sind Polyamid-6 (Poly(ε-caprolactam) = Homopolymer aus ε-Caprolactam bzw. 6-Aminohexansäure), PA-6.6 (Polyhexamethylenadipinamid = Polyamid aus Hexamethylendiamin und Adipinsäure), PA-6/6.6 (Copolyamid aus ε-Caprolactam, Hexamethylendiamin und Adipinsäure), PA-6/66.9 (Copolyamid aus ε-Caprolactam, Hexamethylendiamin, Adipinsäure und Azelainsäure), PA-6/66.12 (Copolyamid aus ε-Caprolactam, Hexamethylendiamin, Adipinsäure und Laurinlactam), PA-6.9 (Polyamid aus Hexamethylendiamin und Azelainsäure), PA-6.10 (Polyhexamethylensebacinamid = Polyamid aus Hexamethylendiamin und Sebacinsäure), PA-6.12 (Polyamid aus ε-Caprolactam und ω-Aminolaurinsäurelactam), PA 4.6 (Polytetramethylenadipinamid = Polyamid aus Tetramethylendiamin und Adipinsäure) oder PA-12 (Poly(ε-laurinlactam) = Homopolymer aus Laurinlactam). Zu den Copolyamiden werden auch heterofunktionelle Polyamide, insbesondere Polyetheramide, Polyesteramide, Polyetheresteramide und Polyamidurethane gerechnet. Unter diesen Polymeren sind solche mit blockartiger Verteilung der verschiedenen Funktionalitäten, sogenannte Blockcopolymere, bevorzugt. Besonders bevorzugt sind Poly(ether-block-amide). Das (Co-)Polyamid bewirkt vor allem eine höhere Steifigkeit der Folie und im Fall der heterofunktionellen Polyamide eine verbesserte Rauchdurchlässigkeit.

Der Anteil des aliphatischen (Co-)Polyamids beträgt allgemein 2 bis 99 Gew.-%, bevorzugt 5 bis 95 Gew.-%, besonders bevorzugt 10 bis 90 Gew.-%, insbesondere 15 bis 85 Gew.-%, ganz besonders 20 bis 80 Gew.-%, vor allem 25 bis 75 Gew.-% oder auch 28 bis 70 Gew.-%, jeweils bezogen auf das Gesamtgewicht des Gemisches.

Das wasserlösliche synthetische Polymer entstammt vorzugsweise einer der Gruppen:
a) Polyvinylalkohol (PVAL), erhalten durch teilweise oder vollständige Verseifung von Polyvinylacetat, sowie Copolymere des Vinylalkohols mit Propen-1-ol,
b) Polyalkylenglykole, insbes. Poly-(1,2-ethandiol), Poly-(1,2-propandiol) oder ein entsprechendes Copolymeres,
c) Polyvinylpyrrolidon bzw. wasserlösliche Copolymere des Vinylpyrrolidons mit mindestens einem α,β-olefinisch ungesättigtem Monomerbaustein,
d) Polymerisate von N-Vinylalkylamiden, z.B. Poly-(N-vinylformamid), Poly(N-vinylacetamid oder
e) (Co-)Polymere der Acrylsäure und/oder des Acrylamids.

Von diesen Gruppen ist a) besonders bevorzugt. Ganz besonders bevorzugt ist PVAL mit einem Molekulargewichtsmittel M_{w} im Bereich 10.000 bis 50.000 und einem Verseifungsgrad der Acetatgruppen im Bereich 75 bis 98%.

Der Anteil des wasserlöslichen synthetischen Polymers beträgt allgemein 1 bis 50 Gew.-%, bevorzugt 3 bis 45 Gew.-%, besonders bevorzugt 5 bis 40 Gew.-%, insbesondere 7 bis 35 Gew.-%, ganz besonders 9 bis 30 Gew.-%, vor allem 11 bis 25 Gew.-% oder auch 13 bis 20 Gew.-%, jeweils bezogen auf das Gesamtgewicht des thermoplastischen Gemisches.

Wasserlösliche synthetische Polymere, insbesondere Polyvinylalkohol (PVAL), werden schon länger zur Herstellung bestimmter semipermeabler Membranen verwendet. Die Membrangewinnung erfolgt grundsätzlich aus Lösung; der über einen Fällprozeß entstandene Film muß anschließend vernetzt werden, um die Wasserlöslichkeit aufzuheben. Über eine thermoplastische Verformung wasserlöslicher Polymere ist bisher wenig bekannt. Aufgrund ihrer hohen Polarität und der damit verbundenen intermolekularen Wechselwirkungen liegt ihr Schmelzpunkt meist deutlich überderZersetzungstemperatur. Gegenstände aus wasserlöslichen Polymeren müssen überdies einer nachträglichen Vernetzungsbehandlung unterworfen werden, um sie in der späteren Anwendung feuchteresistent zu machen.

Das thermoplastische Gemisch enthält erfindungsgemäß mindestens noch einen Füllstoff, der organischen bzw. anorganischen Ursprungs sein kann. Insbesondere der Einbau eines organischen Füllstoffes ruft eine vielfache Verbesserung der Permeationswerte gegenüber dem ungefüllten System hervor. Das gute Wasserspeichervermögen eines Kollagendarmes kann durch geeignete Füllstoffauswahl nachempfunden werden. Schimmelwachstum ist auf der Hülle möglich, das Wachstum wird durch Naturstoffe und durch Substanzen, die bei Wasserkontakt quellen, gefördert. Die Hülle zeigt eine ausreichend hohe Kaliberstabilität (σ₁₅ -Wert größer als 8 N/mm²) und läßt sich einwandfrei von dem Nahrungsmittel (in der Regel ein Wurstbrät) abschälen. Sie eignet sich damit im allgemeinen als künstliche Wursthülle, vorzugsweise für Rohwurstsorten wie luftgetrocknete, geräucherte und ungeräucherte sowie schimmelgereifte Rohwurstsorten.

Als organischer Füllstoff kommen insbesondere Kohlenhydrate in Frage. Sie können aus einem natürlichen Polysaccharid und/oder einem Derivat davon bestehen. Verzweigte und vernetzte Polysaccharide und deren Derivate sind ebenfalls geeignet. Proteine sind bedingt einsetzbar, da sie bei den hohen Verarbeitungstemperaturen zu einem großen Anteil zersetzt werden.

Besonders geeignete Polysaccharide sind z.B. pflanzliche Pulver, Fasern, Fibride oder Pulpe aus Cellulose. Sie sollten durchschnittliche Korngrößen bzw. Faserlängen von 5 bis 3.000 µm, vorzugsweise 10 bis 1.000 µm, besonders bevorzugt 15 bis 500 µm, speziell 20 bis 300 µm, vor allem 25 bis 250 µm oder auch 30 bis 200 µm besitzen. Darunterfallen Pflanzenhaare bzw. Samenfasern wie Baumwolle, Kapok oder Akon, Bastfasern wie Flachs bzw. Leinen, Hanf, Jute, Sunn, Kenaf, Urena, Rosella oder Ramie, Hartfasern (Sisal, Henequen, Manila, Fique, Phormium, Alfagras, Torf, Stroh, Jucca), Fruchtfasern (Kokos, Ananas, Apfel, Orange), Weich- und Hartholzfasern (Fichte, Kiefer, Korkmehl), andere Pflanzenfasern, wie Tillandsia, sowie Fasern aus Weizen, Kartoffeln, Tomaten oder Karotten.

Einsetzbar ist auch native Stärke, beispielsweise aus Kartoffeln, Maniok, Maranta (=Arrowroot), Batate, Weizen, Mais, Roggen, Reis, Gerste, Hirse, Hafer, Sorghum, Kastanien, Eicheln, Bohnen, Erbsen, Bananen, Palmmark (Sago). Maisstärke ist bevorzugt. Das Verhältnis von Amylose zu Amylopektin in den verschiedenen Stärken kann dabei variieren. Das Molekulargewicht M_{w} beträgt zweckmäßig etwa 50.000 bis 10.000.000.

Stärkederivate sind beispielsweise gepfropfte native Stärken. Pfropfungsmittel sind insbesondere Maleinsäureanhydrid, Bernsteinsäureanhydrid oder ε-Caprolacton. Geeignet sind daneben Stärkeester, insbesondere Stärkexanthogenate, -acetate, -phosphate, -sulfate, -nitrate, -maleate, -propionate, -butyrate, -lauroate und -oleate. Ferner Stärkeether, wie Stärkemethylether, -ethylether, -propylether, -butylether, -alkenylether, -hydroxyethylether, -hydroxypropylether. Oxidierte Stärken wie Dialdehydstärke, Carboxystärke oder mit Persulfat abgebaute Stärke sind ebenfalls geeignet.

Daneben sind auch vernetzte Kohlenhydrate verwendbar. Diese sind beispielsweise vernetzt mit Harnstoffderivaten, Urotropin, Trioxan, Di- oder Polyepoxiden, Di- oder Polychlorhydrinen, Di- oder Polyisocyanaten, Kohlensäurederivaten, Diestern oder anorganischen Polysäuren, wie Phosphorsäure oder Borsäure.

Weiterhin eignen sich als Naturstoffkomponente: Olivenkernmehl, Xanthan, Gummi arabicum, Gummi Gellan, Gummi Ghatti, Gummi Kraya, Traganthgummi, Emulsan, Rhamsan, Wellan, Schizophyllan, Polygalactorunate, Laminarin, Amylose, Amylopektin sowie Pektine. Einsetzbar sind auch Alginsäure, Alginate, Carrageenan, Furcellaran, Guargummi, Agar agar, Tamarindengummi, Araliagummi, Arabinogalactan, Pullulan, Johannesbrotgummi, Chitosan, Dextrine, 1,4-α-D-Polyglucan. Das Molekulargewicht M_{w} der genannten Kohlenhydrate liegt allgemein bei 500 bis 100.000.

Verwendbar sind auch synthetische Fasern oder Pulver (z.B. Polyethylen-, Polypropylen-, Polyamid-, Polyacrylonitril-, Polyester-Fasern).Vorzugsweise geeignet sind synthetische, hochtemperaturstabile Fasern oder Pulver auf Basis von Fluorpolymeren, Polysulfonen, Polyethersulfonen, Polyetherketonen, Polyphenylen-sulfiden, Polyaramiden, Polyimiden, aromatischen Polyestern, Polychinoxalinen, Polychinolinen, Polybenzimidazolen, flüssigkristallinen Polymeren und Leiterpolymeren. Deren durchschnittliche Faserlänge bzw. Korngröße beträgt allgemein 5 bis 3.000 µm, bevorzugt 10 bis 1 000 µm, besonders bevorzugt 15 bis 500 µm, speziell 20 bis 300 µm, vor allem 25 bis 250 µm, ganz besonders 30 bis 200 µm.

Ebenso eignen sich anorganische Fasern aus Glas (z.B. Glasfasern, Glasfilamente, Glasstapelfasern), Kurzfasern von Steinwolle (z.B. Basaltwolle, Schlackenwolle, Mineralwollfasern), Füllstoffe bzw. Verstärkungsmaterialien aus Carbonaten (z.B. Kreide, Kalksteinmehl, Calcit, gefälltes Calciumcarbonat, Magnesiumcarbonat, Dolomit, Bariumcarbonat), Sulfaten (z.B. Bariumsulfat, Calciumsulfat), Silicaten (z.B. Talk, Pyrophyllit, Chlorit, Hornblende, Glimmer, Kaolin, Wollastonit, Schiefermehl, gefällte Ca-, Al-, Ca-/Al-, Na-/Al-Silicate, Feldspäte, Mullit, Zeolithe) Kieselsäuren (z.B. Quarz, Quarzgut, Cristobalit, Kieselgur, NeuburgerKieselerde, gefällte Kieselsäure, pyrogene Kieselsäure, Glasmehl, Bimsmehl, Perlit, (Mikro)glaskugeln, beispielsweise Vollglaskugeln, Aluminiumsilikathohlkugeln, Ca-Metasilicate), Oxiden (z.B. Aluminiumhydroxid, Magnesiumhydroxid, Titandioxid, Siliciumdioxid) und weitere, z.B. Kohlenstoff-Fasern. Der anorganische Füllstoff kann mit einem Haftvermittler modifiziert sein, um seine Verträglichkeit mit der umgebenden Kunststoffmatrix zu verbessern. Er kann auch beschichtet sein, beispielsweise um ihm Farbe zu verleihen oder eine bereits vorhandene Farbe zu verändern. Der mittlere Äquivalentkugeldurchmesser der Füllstoff-Partikel ist allgemein größer als 0,1 µm, bevorzugt > 1 µm, besonders bevorzugt > 5 µm, insbesondere > 10 µm, ganz besonders > 12 µm, > 15 µm, > 18 µm, vor allem > 21 µm, > 25 µm, > 28 µm, > 31 µm, > 34 µm, > 37 µm, oder sogar > 40 µm, > 43 µm, > 46 µm oder > 50 µm. Der Äquivalentkugeldurchmesser der größten Partikel sollte vorzugsweise 3.000 µm nicht überschreiten. Besonders bevorzugt beträgt der mittlere Äquivalentdurchmesser weniger als 1.500 µm, besonders bevorzugt weniger als 1.000 µm, ganz besonders bevorzugt weniger als 500 µm und speziell weniger als 250 µm. Besonders bevorzugt sind Mikroglaskugeln mit einer mittleren Korngröße von 1 bis 250 µm, bevorzugt von 2 bis 150 µm.

Die Füllstoffe verleihen der Hülle im allgemeinen eine sehr natürliche seidenmatte Optik und Haptik. Die Oberfläche erhält eine leichte Rauhigkeit, die über die Art des Füllstoffes eingestellt werden kann. Überden Füllstoffanteil kann zudem die Ringelfähigkeit der Hülle beeinflußt werden. Ferner wirkt der Füllstoff als Verstärkungsmittel, wodurch die Kaliberstabilität des gefüllten Materials gegenüber dem ungefüllten deutlich erhöht ist. Schließlich bewirken Füllstoffe - insbesondere organische - erhöhte Rauchdurchlässigkeit, die sich ebenfalls durch Art und Anteil einstellen läßt. Die Hülle ist für die Heißräucherung (>50 °C), für die Warmräucherung (25 - 50 °C) und für die Kalträucherung (bis 25 °C) geeignet. Die Intensität des auf die Wurst übertragenen Raucharomas und der Rauchfarbe steigt mit zunehmender Temperatur des Rauchgases. Darüber hinaus besitzt der Rauch aufgrund seiner aldehydischen, phenolischen und säurehaltigen Bestandteile eine konservierende, antioxidative und verfestigende Wirkung.

Das gute Wasserspeichervermögen wird bei der erfindungsgemäßen Hülle durch Füllstoffe nachgeahmt, die hoch quellfähig sind bzw. wie Superabsorber wirken. Dies verbessert beispielsweise das Reifeverhalten bei Rohwurstsorten und vermindert das Aussaften von Brühwürsten in Zweitverpackung. Geeignet sind insbesondere sulfat-, carboxylat- oder phosphatgruppenhaltige Substanzen bzw. solche mit quarternären Ammoniumgruppen. Ebenso sind hoch quellfähige neutrale Substanzen geeignet. Die Materialien können vernetzt, unvernetzt, verzweigt oder linear vorliegen. In Frage kommen z.B. natürliche, organische Verdickungsmittel wie Agar-Agar, Alginate, Pektine, Carrageenane, Traganth, Gummi arabicum, Guarkernmehl, Johannisbrotkernmehl und Gelatine, daneben aber auch abgewandelte organische Naturstoffe wie (Natrium)Carboxymethylcellulose, Natriumcarboxymethylethylcellulose, Methylhydroxyethylcellulose, Methylhydroxypropylcellulose, Hydroxyethylcellulose und Carboxymethylstärke. Einsetzbar sind ferner anorganische Verdickungsmittel (z.B. Kieselsäure oder Polykieselsäure), Tonmineralien, wie Montmorillonite oder Zeolithe. Als vollsynthetische Verdickungsmittel einsetzbar sind Vinylpolymere, Polycarbonsäuren, Polyether, Polyimine und Polyamide. Ferner Superabsorber auf Polyacrylat- bzw. Polymethacrylatbasis.

Der Gesamtanteil an Füllstoff beträgt allgemein 1 bis 50 Gew.-%, bevorzugt 2 bis 45 Gew.-%, besonders bevorzugt 3 bis 40 Gew.-%, ganz besonders bevorzugt 5 bis 30 Gew.-%, speziell 6 bis 25 Gew.-%, insbesondere 8 bis 21 Gew.-%, 9 bis 19 Gew.-% bzw. 11 bis 15 Gew.-%, jeweils bezogen auf das Gesamtgewicht des thermoplastischen Gemisches. Bei einem hohen Füllstoffanteil läßt sich die Hülle papierartig reißen und kann besonders gut z.B. vom Wurstbrät abgeringelt werden.

Der Zusatz eines Weichmachers bzw. eines Plastifizierungsmittels ist zu empfehlen. Die Verarbeitung auf den Folienblasanlagen wird dadurch vereinfacht, da das Material weniger spröde ist. Außerdem wird durch den besseren Aufschluß der Füllstoffkomponente eine homogenere Folienstruktur erhalten, was für bestimmte Anwendungen erwünscht ist.

Bevorzugte Plastifizierungsmittel sind Dimethylsulfoxid (DMSO), Butan-1,3-diol, Glycerin, Wasser, Ethylenglykol, Butylenglykol, Diglycerid, Diglykolether, Formamid, N-Methylformamid, N,N-Dimethylformamid (DMF), N,N-Dimethylharnstoff, N,N-Dimethylacetamid, N-Methylacetamid, Polyalkylenoxid, Glycerinmono-, -di- oder - triacetat, Sorbit, Erythrit, Mannit, Gluconsäure, Galacturonsäure, Glucarsäure, Glucuronsäure, Polyhydroxycarbonsäuren, Glucose, Fructose, Saccharose, Zitronensäure oder Zitronensäurederivate oder Polyvinylalkohol. Art und Anteil an Plastifizierungsmittel(n) richten sich nach den jeweils ausgewählten Füllstoffen und lassen sich durch einfache Vorversuche optimieren.

Der Anteil an Weichmacher bzw. Plastifizierungsmittel beträgt bis zu 40 Gew.-%, bevorzugt 1 bis 35 Gew.-%, besonders bevorzugt 2 bis 30 Gew.-%, ganz besonders bevorzugt 5 bis 25 Gew.-%, speziell 10 bis 20 Gew.-%, jeweils bezogen auf das Gesamtgewicht des thermoplastischen Gemisches.

Falls gewünscht, kann die erfindungsgemäße Hülle durch Farbstoffe und/oder Pigmente eingefärbtwerden. Beim Verstrecken können sich um die Pigmentpartikel herum Hohlräume (Vakuolen) bilden. Durch die Vakuolen wird die Rauchdurchlässigkeit der Folie noch zusätzlich erhöht. Die Farbstoffe oder Pigmente werden zweckmäßig dem thermoplastischen Gemisch vor der Extrusion zugegeben. Außerdem können bei Bedarf Additive zugesetzt werden, die die Bräthaftung beeinflussen. Grundsätzlich geeignet sind stickstoffhaltige und carboxylgruppenhaltige Verbindungen. Eine bessere Bräthaftung kann auch durch physikalische Verfahren, wie Koronabehandlung, erzielt werden.

In der einschichtigen Ausführungsform besteht die Hülle im wesentlichen aus dem oben genannten thermoplastischen Gemisch. Die Hülle gemäß der Erfindung kann jedoch auch mehrschichtig sein. Sie umfaßt dann allgemein 2 bis 5 Schichten. Das Material für die weiteren Schichten wird so gewählt, daß die gewünschte Wasserdampfdurchlässigkeit nicht beeinträchtigt wird. Mehrschichtige Hüllen lassen sich beispielsweise durch Coextrusion mit Hilfe einer Mehrschicht-Ringdüse herstellen. Die Schicht aus dem füllstoffhaltigen thermoplastischen Gemisch bildet dabei zweckmäßig die Außenschicht. Füllstoffe können jedoch auch in einer oder mehreren der weiteren Schichten enthalten sein. Die Gesamtdicke der mehrschichtigen Hülle liegt allgemein im selben Bereich in dem auch die Gesamtdicke der einschichtigen liegt.

Die Hülle gemäß der Erfindung läßt sich hygienisch einwandfrei in gleichbleibender Qualität herstellen. Das Herstellverfahren ist wesentlich einfacher als der Kollagenprozeß. Schließlich ist die Hülle nach den bekannten Verfahren (Drucken, Kranzen, Raffen) konfektionierbar.

Hergestellt wird die eritndungsgemäße Nahrungsmittelhülle im allgemeinen durch ein Schlauchblasverfahren oder durch biaxiales Streckorientieren.

Die bei dem Schlauchblasverfahren erhaltene Folie wird im Rahmen der vorliegenden Erfindung als "unverstreckte Schlauchfolie" bezeichnet. Mit diesem Ausdruck sind solche Folien gemeint, die lediglich im Schmelzezustand, nicht aber bei Temperaturen unterhalb der Kristallisationstemperatur bzw. Erweichungstemperatur bei amorphen Werkstoffen gedehnt werden. Hierbei wird der extrudierte Schlauch durch Aufblasen in Umfangsrichtung (Querrichtung) und durch Abzugswalzen in Längsrichtung gereckt. Da die Verformung unmittelbar aus der Schmelze erfolgt, ist der Orientierungsgrad der Polymerketten gering und vernachlässigbar. Man spricht dabei von unorientierten Folien.

Beim biaxialen Streckorientieren wird zunächst durch Extrudieren ein Schlauch mit relativ hoher Wandstärke hergestellt. Dieser wird nur wenig oder gar nicht aufgeblasen. Anschließend wird der sogenannte Primärschlauch abgekühlt. Erst in einem weiteren Schritt wird der Primärschlauch auf die zur biaxialen Streckorientierung notwendige Temperatur aufgeheizt und dann durch einen von innen wirkenden Gasdruck und durch Abzugsrollen biaxial streckorientiert. Dadurch wird ein hoher Orientierungsgrad der Polymerketten erreicht. Das Längs- und Querstreckverhältnis befindet sich in dem in der Praxis im allgemeinen üblichen Bereich. Es richtet sich aber auch nach der Art und dem Anteil der verwendeten Rohstoffe.

Die nahtlose schlauchförmige Hülle weist vorzugsweise eine Dicke von 40 bis 200 µm auf, wenn sie nach einem Schlauchblasverfahren hergestellt ist, und eine Dicke von 25 bis 75 µm, wenn sie durch biaxiale Streckorientierung (Double-bubble Verfahren) erhalten wurde. Nahtlose schlauchförmige Hüllen, die als künstliche Wursthüllen verwendet werden sollen, werden bevorzugt durch biaxiale Streckorientierung hergestellt. Nach der biaxialen Streckorientierung folgtzweckmäßigerweise noch eine teilweise oder vollständige Thermofixierung. Durch die Thermofixierung kann der Schrumpf der Hülle auf den gewünschten Wert eingestellt werden. Künstliche Wursthüllen haben allgemein einen Schrumpf von weniger als 25 % in Längs- und Querrichtung, wenn sie 1 min lang in Wasser von 90 °C gelegt wurden.

Die schlauchförmige Hülle kann dann noch zu einseitig abgebundenen Abschnitten konfektioniert oder abschnittsweise zu Raffraupen aufgestockt werden. Ferner kann sie zu einem sogenannten Kranzdarm gebogen werden. Dazu wird die Hülle einseitig mit Hitzestrahlung oder Heißluft beaufschlagt. Möglich sind auch spezielle Naturdarmformen, wie Fettenden. Verfahren und Vorrichtungen zum Verkranzen von Polymerhüllen sind dem Fachmann geläufig.

Verwendet wird die erfindungsgemäße Hülle vor allem als künstliche Wursthülle, insbesondere für Rohwurstsorten.

In den nachfolgenden Ausführungsbeispielen erfolgt die Messung der einzelnen Eigenschaften gemäß den angeführten Normen bzw. Verfahren.

### Meßmethoden

### Wasserdampfdurchlässigkeit (WDD)

Die WDD wurde gemäß DIN 53 122 bestimmt.

### σ₁₅ -Wert

Der (σ₁₅ -Wert) wurde gemäß DIN 53 455 bestimmt. Er ist die Kraft, die auf eine Probe einwirkt, um sie um 15 % zu verdehnen.

### Reißfestigkeit, Reißdehnung

Die Reißfestigkeit und Reißdehnung wurden gemäß DIN 53 455 bestimmt.

### Rauhigkeit

Die Rauhigkeitswerte wurden nach DIN 4768 bestimmt.

### Glanz

Der Glanz wurde gemäß DIN 67 530 bestimmt.

### Beispiele

Die Beispiele wurden gemäß den nachfolgend beschriebenen Verfahren hergestellt. Prozente sind Gewichtsprozente, soweit nicht anders angegeben oder aus dem Zusammenhang ersichtlich. Die in den Beispielen genannten Komponenten wurden jeweils in einem Zweischneckenextruder vermischt und thermoplastifiziert.

### I. Herstellung der eingesetzten Granulate

### Variante A

### Compound aus wasserlöslichen Polymeren und Plastifizierungsmittel

In einem Rührkessel mit Mantel-Flüssigkeitsheizung und wandgängigem Rührer werden bei Raumtemperatur 75 Gew-% Polvinylalkohol vorgelegt. Anschließend werden unter Rühren bei ca. 1000 U/min zunächst 15 Gew.-% Polyethylenglykol und danach 7,5 Gew.-% Glycerin sowie 2,5 Gew.-% Wasser zugesetzt, jeweils bezogen auf die Gesamtmasse des Gemisches. Der Kesselinhaltwurde auf 100 bis 110°C erwärmt, 15 min bei dieser Temperatur gerührt und unter weiterem Rühren wieder auf 30 bis 40°C abgekühlt. Das resultierende Pulver wurde per Dosiervorrichtung in einen beheizten Zweiwellenkneter(Zylinderdurchmesser25 mm, UD-Verhältnis 36) mit Einloch-Austrittsdüse dosiert, so daß sich ein Massestrom von 8 kg/h ergab. Die Schneckendrehzahl betrug 250 U/min, die Heizungen waren auf Temperaturen von 120°C (Aufgabestelle) stromabwärts bis auf 180°C steigend (Düse) eingestellt. Der austretende wasserklare Strang wurde auf einer Luftkühlstrecke abgekühlt und anschließend mittels Stranghäcksler zu Granulatkörnern zerteilt. Das erhaltene Granulat wird im Folgenden als Polyvinylalkohol-Compound (A) bezeichnet.

### Variante B

Zunächst wurde der organische Füllstoff in den Extruder eingefüllt und mit einem Plastifizierungsmittel versetzt. Dabei wurde die Temperatur im Extruder über mehrere Zonen von etwa 90 bis etwa 180 °C erhöht. Anschließend wurde das Gemisch aus (Co-)Polyamid und Polyvinylalkohol-Compound (A) bzw. einem anderen wasserlöslichen Polymeren in den Extruder eingespeist und mit den übrigen Bestandteilen bei Temperaturen zwischen 170 und 260 °C (je nach Schmelzpunkt des Polyamides) vermischt und die daraus gebildete thermoplastische Schmelze extrudiert. Das Extrudat wurde schließlich zu einem Granulat zerkleinert.

### Variante C

Hierbei wurde zuerst das Gemisch aus (Co-)Polyamid und Polyvinylalkohol-Compound (A) bzw. einem anderen wasserlöslichen Polymeren in den Extruder eingespeist und bei Temperaturen zwischen 170 und 260 C (je nach Schmelzpunkt des Polyamides) vermischt. Danach wurde der organische bzw. anorganische Füllstoff hinzugegeben. Ein zusätzliches Plastifizierungsmittel war hierbei nicht zwingend erforderlich. Das thermoplastische Gemisch wurde schließlich zu einem Granulat zerkleinert.

Wird eine sehr hohe Aufschmelztemperatur benötigt (230 bis 260 °C), so ist auf eine möglichst kurze Verweilzeit des Polyvinylalkohol-Compounds (A) bzw. des wasserlöslichen Polymeren zu achten, da sonst deutliche Zersetzungsreaktionen eintreten. Es ist zweckmäßig, in diesem Fall möglichst hochtemperaturstabile Naturstoffe, wie Cellulose, zu verwenden oderden Einsatz anorganischer Füllstoffe in Betracht zu ziehen.

### II. Herstellung von Schlauchhüllen

Das nach Variante B bzw. C hergestellte Granulat wurde durch ein Schlauchblasverfahren bzw. durch biaxiales Streckorientieren zu einer Schlauchfolie verarbeitet.

Es ist auch möglich, die Granulate (B) und (C) ohne das nach Variante (A) erhaltene Produkt bzw. ohne das wasserlösliche Polymer herzustellen, wobei diese letztgenannten Komponenten dann dem Extrudererst kurz vor der Verarbeitung zur Schlauchfolie zugesetzt werden, um eine thermische Doppelbelastung möglichst zu vermeiden.

In den Beispielen wurden verwendet:
- Polyamid 6/6.6 (®Ultramid C4 der BASF Aktiengesellschaft)
- Polyamid 6 (®Grilon F40 der Ems Chemie AG)
- Polvinylalkohol (PVAL) mit einem Molekulargewichtsmittel MW von 26.000 und einem Verseifungsgrad von 88% (®Mowiol 26-88 der Hoechst AG)
- Polyethylenglykol (PEG) mit einem mittleren Polymerisationsgrad von 300, ®Genapol PEG 300 der Hoechst AG
- Glycerin 96%ig, Reinheit gemäß DAB (Deutsches Arzneimittelbuch)
- Füllstoff-Batch, Masterbatch aus Calciumcarbonat und Polyamid 6, Grilon XE 3690 der Fa. Ems Chemie AG
- Polyamid 6-Polyethylenglykol-Blockcopolymer (®Pebax MH 1657 SA der Elf Atochem S.A.)

Zusammensetzung und Eigenschaften der schlauchförmigen Hüllen gemäß den Beispielen 1 bis 17 sind in den Tabellen 1 bis 4 aufgeführt.

**Tabelle 1**

| **Beispiel** | **Polyamide / wasserlösliche Polymere** | | **Füllstoff / Plastifizierungsmittel** | | **Verfahren und Granulat** |
|---|---|---|---|---|---|
| 1 | 34,0 Gew.-% | Grilon F40 | 18,5 Gew.-% | Maisstärke | Schlauchblasverfahren |
| | 10.0 Gew.-% | Ultramid C4 | 7,5 Gew.-% | Glycerin | Granulat nach Variante B |
| | 30,0 Gew.-% | Polyvinylalkohol-Compound | | | |
| 2 | 42,5 Gew.-% | Ultramid C4 | 23,0 Gew.-% | Maisstärke | Schlauchblasverfahren |
| | 25,0 Gew.-% | Polyvinylalkohol-Compound | 9,5 Gew.-% | Glycerin | Granulat nach Variante B |
| 3 | 40,0 Gew.-% | Grilon F40 | 3,0 Gew.-% | Maisstärke | |
| | 25,0 Gew.-% | Pebax MH 1657 | 3,0 Gew.-% | Guarkernmehl | Schlauchblasverfahren |
| | 25,0 Gew.-% | Polyvinylalkohol-Compound | 4,0 Gew.-% | Glycerin | Granulat nach Variante B |
| 4 | 43,0 Gew.-% | Grilon F40 | | | |
| | 25,0 Gew.-% | Pebax MH 1657 | 4,5 Gew.-% | Cellulosepulver | Schlauchblasverfahren |
| | 25,0 Gew.-% | Polyvinylalkohol-Compound | 2,5 Gew.-% | Glycerin | Granulat nach Variante B |
| 5 | 68,0 Gew.-% | Grilon F40 | 4,5 Gew.-% | Cellulosepulver | Schlauchblasverfahren |
| | 25,0 Gew.-% | Polyvinylalkohol-Compound | 2,5 Gew.-% | Glycerin | Granulat nach Variante B |
| 6 | 52,0 Gew.-% | Grilon F40 | | | Schlauchblasverfahren |
| | 40,0 Gew.-% | Polyvinylalkohol-Compound | 8,0 Gew.-% | Mikroglaskugeln | Granulat nach Variante C |
| 7 | 67,0 Gew.-% | Grilon F40 | | | Schlauchblasverfahren |
| | 25,0 Gew.-% | Polyvinylalkohol-Compound | 8,0 Gew.-% | Mikroglaskugeln | Granulat nach Variante C |
| 8 | 41,0 Gew.-% | Grilon F40 | | | |
| | 25,0 Gew.-% | Pebax MH 1657 | | | Schlauchblasverfahren |
| | 25,0 Gew.% | Polyvinylalkohol-Compound | 9,0 Gew.-% | Mikroglaskugeln | Granulat nach Variante C |
| 9 | 38,0 Gew.-% | Ultramid C4 | | | |
| | 22,0 Gew.-% | Polyvinylalkohol-Compound | 9,0 Gew.-% | Maisstärke | biaxiale Streckorientierung |
| | 22,0 Gew.-% | Pebax MH 1657 | 3,5 Gew.-% | Glycerin | Granulat nach Variante B |
| | 5,0 Gew.-% | Grilon XE 3690 | | | |
| 10 | 33,5 Gew.-% | Ultramid C4 | | | |
| | 22,0 Gew.-% | Polyvinylalkohol-Compound | 12,5 Gew.-% | Maisstärke | biaxiale Streckorientierung |
| | 22,0 Gew.-% | Pebax MH 1657 | 5,0 Gew.% | Glycerin | Granulat nach Variante B |
| | 5,0 Gew.-% | Grilon XE 3690 | | | |

**Tabelle 2**

| **Beispiel** | **WDD)¹** | **σ₁₅ - Wert)²** | | **Reißfestigkeit)²** | | **Reißdehnung)²** | | **Rauhigkeit** | | | **Glanzwert** | | | **Foliendicke** |
|---|---|---|---|---|---|---|---|---|---|---|---|---|---|---|
| | **[g/m²·d]** | **[N/mm²]** | | **[N/mm²]** | | **[%]** | | **[µm]** | | | | | | **[µm]** |
| **Nr.** | | **längs** | **quer** | **längs** | **quer** | **längs** | **quer** | **Rₐ** | **R_{z}** | **Rₘₐₓ** | **20°** | **60°** | **85°** | |
| 1 | 171 | 14 | 13 | 42 | 28 | 411 | 305 | 1,5 | 8 | 14 | 0,4 | 5,9 | 1,2 | 44-56 |
| 2 | 267 | 20 | 18 | 43 | 39 | 381 | 342 | 2,1 | 9,8 | 14 | 0,3 | 2,5 | 3,8 | 45 - 72 |
| 3 | 208 | 10 | 9 | 20 | 12 | 250 | 150 | 5 | 27 | 46 | 0,6 | 6,6 | 5 | 75-95 |
| 4 | 171 | 11 | 10 | 29 | 21 | 320 | 264 | 3,8 | 22 | 26 | 0,6 | 6,3 | 4,7 | 80-90 |
| 5 | 100 | 14 | 13 | 25 | 21 | 253 | 224 | 4 | 22 | 26 | 0,6 | 6,1 | 4,2 | 60-70 |
| 6 | 164 | 16 | 15 | 27 | 20 | 210 | 100 | 3 | 16 | 25 | 1,5 | 115 | 18 | 70-80 |
| 7 | 135 | 18 | 16 | 28 | 22 | 240 | 160 | 2,8 | 15 | 23 | 1,6 | 12 | 19 | 70-80 |
| 8 | 157 | 11 | 11 | 27 | 22 | 320 | 306 | 3,2 | 17 | 27 | 1,3 | 11 | 18 | 70-80 |
| 9 | 204 | 12 | 13 | 50 | 48 | 110 | 75 | - | - | - | - | - | - | 30-38 |
| 10 | 214 | 10 | 11 | 45 | 43 | 90 | 74 | - | - | - | - | - | - | 32-39 |

| | | | | | | | | | | | | | | |
|---|---|---|---|---|---|---|---|---|---|---|---|---|---|---|
| )¹ WDD = Wasserdampfdurchlässigkeit. Die Hülle wurde dabei einseitig mit Luft einer relativen Feuchte von 85 % bei 23 °C beaufschlagt. )² Beispiele 9 und 10 wurden an nassen Proben von 15 mm Breite bei einer Einspannlänge von 50 mm bestimmt, Beispiele 1 bis 8 an trockenen Proben | | | | | | | | | | | | | | |

**Tabelle 3**

| **Beispiel** | **Polyamide / wasserlösliche Polymere** | | **Füllstoff / Plastifizierungsmittel** | | **Verfahren und Granulate** |
|---|---|---|---|---|---|
| 11 | 42,5 Gew.-% | Ultramid C4 | 23,5 Gew.-% | Maisstärke | Schlauchblasverfahren |
| | 25,0 Gew.-% | Polyvinylalkohol-Compound | 9,0 Gew.-% | Glycerin | Granulat nach Variante B |
| 12 | 46,0 Gew.-% | Grilon F40 | | | |
| | 10,0 Gew.-% | Polyvinylalkohol-Compound | 6,0 Gew.-% | Cellulose | Schlauchblasverfahren |
| | 38,0 Gew.-% | Pebax MH 1657 | | | Granulat nach Variante C |
| 13 | 45,0 Gew.-% | Grilon F40 | | | |
| | 5,0 Gew.-% | Polyvinylalkohol-Compound | 8,0 Gew.-% | Cellulose | Schlauchblasverfahren |
| | 42,0 Gew.-% | Pebax MH 1657 | | | Granulat nach Variante C |
| 14 | 48,0 Gew.-% | Grilon F40 | | | |
| | 5,0 Gew.-% | Polyvinylalkohol-Compound | 4,0 Gew.-% | Cellulose | Schlauchblasverfahren |
| | 43,0 Gew.-% | Pebax MH 1657 | | | Granulat nach Variante C |
| 15 | 46,0 Gew.-% | Grilon F40 | | | |
| | 10,0 Gew.-% | Polyvinylalkohol-Compound | 4,0 Gew.-% | Guarkernmehl | Schlauchblasverfahren |
| | 40,0 Gew.-% | Pebax MH 1657 | | | Granulat nach Variante C |
| 16 | 37,0 Gew.-% | Ultramid C4 | | | |
| | 10,0 Gew.-% | Grilon CF6S | | | |
| | 5,0 Gew.-% | Polyvinylalkohol-Compound | 6,0 Gew.-% | Cellulose | Schlauchblasverfahren |
| | 42,0 Gew.-% | Pebax MH 1657 | | | Granulat nach Variante C |
| 17 | 43,0 Gew.-% | Grilon F40 | | | |
| | 5,0 Gew.-% | Polyvinylalkohol-Compound | 4,0 Gew.-% | Cellulose | Schlauchblasverfahren |
| | 45,0 Gew.-% | Pebax MH 1657 | 3,0 Gew.-% | Glycerin | Granulat nach Variante B |

**Tabelle 4**

| **Beispiel** | **WDD)¹** | **σ₁₅ - Wert)²** | | **Reißfestigkeit)²** | | **Reißdehnung)²** | | **Foliendicke** |
|---|---|---|---|---|---|---|---|---|
| | **[g/m²·d]** | **[N/mm²]** | | **[N/mm²]** | | **[%]** | | **[µm]** |
| **Nr.** | | **längs** | **quer** | **längs** | **quer** | **längs** | **quer** | |
| 11 | 302 | 17 | 15 | 46 | 39 | 436 | 434 | 50-70 |
| 12 | 456 | 15 | 13 | 17 | 15 | 78 | 51 | 130-150 |
| 13 | 517 | 15 | 13 | 18 | 15 | 69 | 51 | 130-150 |
| 14 | 572 | 14 | 12 | 23 | 20 | 202 | 148 | 100-120 |
| 15 | 631 | 15 | 13 | 26 | 22 | 328 | 244 | 95-115 |
| 16 | 760 | 8 | 8 | 20 | 15 | 329 | 261 | 80-98 |
| 17 | 1050 | 11 | 9 | 20 | 16 | 242 | 210 | 65-85 |

| | | | | | | | | |
|---|---|---|---|---|---|---|---|---|
| )¹ WDD = Wasserdampfdurchlässigkeit. Die Hülle wurde dabei einseitig mit Luft einer relativen Feuchte von 85 % bei 23 °C beaufschlagt. )² Beispiele 11 bis 17 wurden gemäß DIN 53 455 an trockenen Proben von 15 mm Breite bei einer Einspannlänge von 50 mm bestimmt | | | | | | | | |

## Patentansprüche

1. Ein- oder mehrschichtige Nahrungsmittelhülle aus einem thermoplastischen Gemisch, das mindestens ein aliphatisches Polyamid und/oder Copolyamid und mindestens ein oder mehrere synthetische wasserlösliche Polymere enthält, **dadurch gekennzeichnet, daß** das thermoplastische Gemisch mindestens einen organischen und/oder anorganischen Füllstoff umfaßt, wobei die Hülle eine Wasserdampfdurchlässigkeit im unverstreckten, monoaxial oder biaxial verstreckten Zustand von 50 bis 1.500 g/m²·d aufweist, wobei eine einschichtige, biaxial orientierte Hülle mit einer Wasserdampfdurchlässigkeit von 40 bis 200 g/m² d mit organischem Füllstoff aus Polysaccharid oder Exo-polysaccharid oder anorganischem Füllstoff aus Quarzpulver, Titandioxid, Calciumcarbonat, Talkum, Glimmer oder einem anderen Alumosilikat, aus Glasstapelfasern, sonstigen Mineralfasern oder Mikroglaskugeln ausgeschlossen ist.

2. Nahrungsmittelhülle gemäß Anspruch 1, **dadurch gekennzeichnet, daß** die Wasserdampfdurchlässigkeit der unverstreckten oder monoaxial verstreckten Hülle 100 bis 1.200 g/m²·d, bevorzugt 125 bis 1.100 g/m²·d, besonders bevorzugt 150 bis 1.000 g/m²·d, und der biaxial verstreckten Hülle 100 bis 1.200 g/m²·d, bevorzugt 125 bis 1.100 g/m², besonders bevorzugt 150 bis 1.000 g/m²·d, beträgt.

3. Nahrungsmittelhülle gemäß Anspruch 1 oder 2, **dadurch gekennzeichnet, daß** das aliphatische Polyamid und/oder (Co)polyamid ein PA-4.6, PA-6, PA-6.6, PA-6/6.6, PA-6.9, PA-6.10, PA-6.12, PA-6/66.9, PA-6/66.12, PA-12 und/oder ein heterofunktionelles Polyamid, vorzugsweise ein Polyetheramid, ein Polyesteramid, ein Polyetheresteramide und/oder ein Polyamidurethan, insbesondere ein Poly(ether-block-amid) ist, wobei der Anteil des aliphatischen Polyamids und/oder (Co)polyamids im allgemeinen 2 bis 99 Gew.-%, bevorzugt 5 bis 95 Gew.-%, besonders bevorzugt 15 bis 85 Gew.-%, jeweils bezogen auf das Gesamtgewicht des Gemisches, beträgt.

4. Nahrungsmittelhülle gemäß einem oder mehreren der Ansprüche 1 bis 3, **dadurch gekennzeichnet, daß** das wasserlösliche synthetische Polymer ein Homo- und/oder Copolymer mit Einheiten aus Vinylpyrrolidon, N-Vinylalkylamid, Alkyloxazolin, Alkylglycol, Vinylalkohol, Vinylalkoholether, Vinylalkoholester, Acrylamid, Alkylenoxid, (Meth-)acrylsäure, Maleinsäure und/oder Celluloseether ist, wobei dessen Anteil im allgemeinen 1 bis 50 Gew.-%, bevorzugt 3 bis 45 Gew.-%, besonders bevorzugt 5 bis 40 Gew.-%, jeweils bezogen auf das Gesamtgewicht des Gemisches, beträgt.

5. Nahrungsmittelhülle gemäß Anspruch 4 **dadurch gekennzeichnet, daß** das synthetische wasserlösliche Polymer ein Polyvinylalkohol mit einem Molekulargewichtsmittel M_{w} im Bereich von 10.000 bis 50.000 und einem Verseifungsgrad der Acetatgruppen im Bereich von 75 bis 98%, ist.

6. Nahrungsmittelhülle gemäß einem oder mehreren der Ansprüche 1 bis 5, **dadurch gekennzeichnet, daß** der organische Füllstoff ein Kohlenhydrat, vorzugsweise ein natürliches Polysaccharid und/oder ein Derivat davon, ein verzweigtes odervernetztes Polysaccharid und/oderein Derivat davon, eine organische synthetische Faser oder ein organisches synthetisches Pulver, vorzugsweise eine Faser oder ein Pulver auf Basis von Fluorpolymeren, Polysulfonen, Polyethersulfonen, Polyetherketonen, Polyphenylen-sulfiden, Polyaramiden, Polyimiden, aromatischen Polyestern, Polychinoxalinen, Polychinolinen, Polybenzimidazolen, flüssigkristallinen Polymeren oder Leiterpolymeren, ist, wobei deren durchschnittliche Faserlänge bzw. Korngröße allgemein allgemein 5 bis 3.000 µm, bevorzugt 10 bis 1.000 µm, besonders bevorzugt 15 bis 500 µm, beträgt.

7. Nahrungsmittelhülle gemäß einem oder mehreren der Ansprüche 1 bis 6, **dadurch gekennzeichnet, daß** der Füllstoff hoch quellfähig ist, wobei eine sulfat-, carboxylat- oder phosphatgruppenhaltige Substanz, eine Substanz enthaltend quarternäre Ammoniumsalze, ein organisches Verdickungsmittel, ein abgewandelter organischer Naturstoff, ein anorganisches Verdickungsmittel, ein vollsynthetisches Verdickungsmittel oder ein Superabsorber auf Polyacrylat- oder Polymethacrylatbasis bevorzugt sind.

8. Nahrungsmittelhülle gemäß einem oder mehreren der Ansprüche 1 bis 7, **dadurch gekennzeichnet, daß** der anorganische Füllstoff aus Fasern und/oder Kugeln und/oder Pulver aus Glas, vorzugsweise Glasfasern, Glasfilamente, Glasstapelfasern; aus Steinwolle-Kurzfasern, Basaltwolle, Schlackenwolle, Mineralwollfasern; Carbonaten, vorzugsweise Kreide, Kalksteinmehl, Calcit, gefälltes Calciumcarbonat, Magnesiumcarbonat, Dolomit und Bariumcarbonat; aus Sulfaten, vorzugsweise Bariumsulfat und Calciumsulfat; aus Silicaten, vorzugsweise Talk, Pyrophyllit, Chlorit, Hornblende, Glimmer, Kaolin, Wollastonit, Schiefermehl, gefällte Ca-, Al-, Ca-/Al-, Na-/Al-Silicate, Feldspäte, Mullit und Zeolithe; aus Kieselsäuren, vorzugsweise Quarz, Quarzgut, Cristobalit, Kieselgur, Neuburger Kieselerde, gefällte Kieselsäure, pyrogene Kieselsäure, Glasmehl, Bimsmehl, Perlit, (Mikro)-glaskugeln (Vollglaskugeln), Aluminiumsilikathohlkugeln und Ca-Metasilicaten; aus Oxiden, vorzugsweise Aluminiumhydroxid, Magnesiumhydroxid, Titandioxid und Siliciumdioxid oder aus Kohlenstoffasern besteht, wobei die Korngröße bzw. Faserlänge allgemeinen 0,1 bis 3.000 µm, bevorzugt 1 bis 1.500 µm, besonders bevorzugt 5 bis 1.000 µm, beträgt.

9. Nahrungsmittelhülle gemäß Anspruch 8, **dadurch gekennzeichnet, daß** der anorganische Füllstoff aus Mikroglaskugeln besteht, die eine mittlere Korngröße von 1 bis 250 µm, vorzugsweise 2 bis 150 µm besitzen.

10. Nahrungsmittelhülle gemäß Anspruch 9, **dadurch gekennzeichnet, daß** die Oberfläche der Mikroglaskugeln modifiziert ist mit einem Haftvermittler, der die Haftung an umgebenden Polymeren verbessert.

11. Nahrungsmittelhülle gemäß einem oder mehreren der Ansprüche 1 bis 10, **dadurch gekennzeichnet, daß** der Anteil des Füllstoffs 1 bis 50 Gew.-%, bevorzugt 2 bis 45 Gew.-%, besonders bevorzugt 3 bis 40 Gew.-%, jeweils bezogen auf das Gesamtgewicht des thermoplastischen Gemisches, beträgt.

12. Nahrungsmittelhülle gemäß einem oder mehreren der Ansprüche 1 bis 11, **dadurch gekennzeichnet, daß** sie zusätzlich ein Plastifizierungsmittel, vorzugsweise Dimethylsulfoxid, Butan-1,3-diol, Glycerin, Wasser, Ethylenglykol, Butylenglykol, Diglycerid, Diglykolether, Formamid, N-Methylformamid, N,N-Dimethylformamid, N,N-Dimethylharnstoff, N,N-Dimethylacetamid, N-Methylacetamid, Polyalkylenoxid, Glycerinmono-, di-oder-triacetat, Sorbit, Erythrit, Mannit, Gluconsäure, Galacturonsäure, Glucarsäure, Glucuronsäure, Polyhydroxycarbonsäuren, Glucose, Fructose, Saccharose, Zitronensäure, Zitronensäurederivate oder Polyvinylalkohol, enthält, wobei der Anteil an Plastifizierungsmittel bis zu 40 Gew.-%, bevorzugt 1 bis 35 Gew.-%, besonders bevorzugt 2 bis 30 Gew.-%, jeweils bezogen auf das Gesamtgewicht des thermoplastischen Gemisches, beträgt.

13. Verfahren zur Herstellung einer Nahrungsmittelhülle gemäß einem oder mehreren der Ansprüche 1 bis 12, **dadurch gekennzeichnet, daß** das thermoplastische Gemisch mit mindestens einem aliphatischen Polyamid und/oder Copolyamid und mindestens einem synthetischen wasserlöslichen Polymer und mindestens einem anorganischen und/oder organischen Füllstoff extrudiert oder coextrudiert und der dabei entstehende Schlauch blasgeformt (unorientiert), mono- oder biaxial streckorientiert wird.

14. Verfahren gemäß Anspruch 13, **dadurch gekennzeichnet, daß** der Schlauch anschließend zu einseitig abgebundenen Abschnitten oder zu einer Raffraupe konfektioniert wird.

15. Verfahren gemäß Anspruch 13, **dadurch gekennzeichnet, daß** der Schlauch anschließend zu einer naturdarmähnlichen Form, insbesondere Kranzdarm und Fettende, weiterverarbeitet wird.

16. Verwendung der Nahrungsmittelhülle gemäß einem oder mehreren der Ansprüche 1 bis 12 als künstliche Wursthülle, bevorzugt für Rohwurstarten.

## Claims

1. A single- or multi-layered food casing made from a thermoplastic mixture which comprises at least one aliphatic polyamide and/or copolyamide and at least one or more synthetic water-soluble polymers, wherein the thermoplastic mixture comprises at least one organic and/or inorganic filler, the casing, in the unstretched, monoaxially or biaxially stretched state, having a water vapor permeability of 50 to 1500 g/m²·d, excluding a monolayer, biaxially oriented casing having a water vapor permeability of 40 to 200 g/m²·d having an organic filler of polysaccharide or exopolysaccharide, or an inorganic filler of quartz powder, titanium dioxide, calcium carbonate, talcum, mica or another aluminosilicate, of glass staple fibers, other mineral fibers or glass microspheres.

2. The food casing as claimed in claim 1, wherein the water vapor permeability of the unstretched or monoaxially stretched casing is 100 to 1200 g/m²·d, preferably 125 to 1100 g/m²·d, particularly preferably 150 to 1000 g/m²·d, and of the biaxially stretched casing is 100 to 1200 g/m²·d, preferably 125 to 1100 g/m²·d, particularly preferably 150 to 1000 g/m²·d.

3. The food casing as claimed in claim 1 or 2, wherein the aliphatic polyamide and/or (co)polyamide is a nylon-4.6, nylon-6, nylon-6.6, nylon-6/6.6, nylon-6.9, nylon-6.10, nylon-6.12, nylon-6/66.9, nylon-6/66.12, nylon-12 and/or a heterofunctional polyamide, preferably a polyetheramide, a polyesteramide, polyetheresteramide and/or a polyamide urethane, in particular a poly(ether block amide), the fraction of the aliphatic polyamide and/or (co)polyamide generally being 2 to 99 % by weight, preferably 5 to 95 % by weight, particularly preferably 15 to 85 % by weight, in each case based on the total weight of the mixture.

4. The food casing as claimed in one or more of claims 1 to 3, wherein the water-soluble synthetic polymer is a homo- and/or copolymer having units ofvinylpyrrolidone, N-vinylalkylamide, alkyloxazoline, alkyl glycol, vinyl alcohol, vinyl alcohol ether, vinyl alcohol ester, acrylamide, alkylene oxide, (meth)acrylic acid, maleic acid and/or cellulose ether, the fraction of which generally being 1 to 50 % by weight, preferably 3 to 45 % by weight, particularly preferably 5 to 40 % by weight, in each case based on the total weight of the mixture.

5. The food casing as claimed in claim 4, wherein the synthetic water-soluble polymer is a poly(vinyl alcohol) having a mean molecular weight M_{w} in the range 10 000 to 50 000, and a degree of saponification of the acetate groups in the range 75 to 98 %.

6. The food casing as claimed in one or more of claims 1 to 5, wherein the organic filler is a carbohydrate, preferably a natural polysaccharide and/or a derivative thereof, a branched or crosslinked polysaccharide and/or a derivative thereof, an organic synthetic fiber or an organic synthetic powder, preferably a fiber or a powder based on fluoropolymers, polysulfones, poly(ether sulfone)s, poly(ether ketone)s, poly(phenylene sulfide)s, polyaramids, polyimides, aromatic polyesters, polyquinoxalines, polyquinolines, polybenzimidazoles, liquid crystal polymers or conducting polymers, its mean fiber length or particle size generally being 5 to 3000 µm, preferably 10 to 1000 µm, particularly preferably 15 to 500 µm.

7. The food casing as claimed in one or more of claims 1 to 6, wherein the filler is highly swellable, preference being given to a sulfate-, carboxylate- or phosphate-containing substance, a substance comprising quaternary ammonium salts, an organic thickener, a modified organic natural substance, an inorganic thickener, a wholly synthetic thickener or a superabsorber based on polyacrylate or polymethacrylate.

8. The food casing as claimed in one or more of claims 1 to 7, wherein the inorganic filler comprises fibers and/or beads and/or powders of glass, preferably glass fibers, glass filaments, glass staple fibers; rock wool short fibers, basalt wool, slag wool, mineral wool fibers; carbonates, preferably chalk, limestone flour, calcite, precipitated calcium carbonate, magnesium carbonate, dolomite and barium carbonate; sulfates, preferably barium sulfate and calcium sulfate; silicates, preferably talc, pyrophyllite, chlorite, hornblende, mica, kaolin, wollastonite, slate powder, precipitated Ca, Al, Ca/Al, Na/Al silicates, feldspars, mullite and zeolites; silicic acids, preferably quartz, fused silica, cristobalite, kieselguhr, Neuburg silica, precipitated silicic acid, pyrogenic silicic acid, glass flour, pumice flour, perlite, (micro)glass beads (solid glass beads), aluminosilicate hollow beads, and Ca metasilicates; oxides, preferably aluminum hydroxide, magnesium hydroxide, titanium dioxide and silicon dioxide or carbon fibers, the particle size or fiber length generally being 0.1 to 3000 µm, preferably 1 to 1500 µm, particularly preferably 5 to 1000 µm.

9. The food casing as claimed in claim 8, wherein the inorganic filler comprises microglass beads which have a mean particle size of 1 to 250 µm, preferably 2 to 150 µm.

10. The food casing as claimed in claim 9, wherein the surface of the microglass beads is modified by an adhesion promoter which improves the adhesion to surrounding polymers.

11. The food casing as claimed in one or more of claims 1 to 10, wherein the fraction of the filler is 1 to 50 % by weight, preferably 2 to 45 % by weight, particularly preferably 3 to 40 % by weight, in each case based on the total weight of the thermoplastic mixture.

12. The food casing as claimed in one or more of claims 1 to 11, wherein it additionally comprises a plasticizer, preferably dimethyl sulfoxide, butane-1,3-diol, glycerol, water, ethylene glycol, butylene glycol, diglyceride, diglycol ether, formamide, N-methylformamide, N,N-dimethylformamide, N,N-dimethylurea, N,N-dimethylacetamide, N-methylacetamide, polyalkylene oxide, glycerol mono-, di- or triacetate, sorbitol, erythritol, mannitol, gluconic acid, galacturonic acid, glucaric acid, glucuronic acid, polyhydroxycarboxylic acids, glucose, fructose, sucrose, citric acid, citric acid derivatives or poly(vinyl alcohol), the fraction of plasticizer being up to 40 % by weight, preferably 1 to 35 % by weight, particularly preferably 2 to 30 % by weight, in each case based on the total weight of the thermoplastic mixture.

13. A method for producing a food casing as claimed in one or more of claims 1 to 12, wherein the thermoplastic mixture having at least one aliphatic polyamide and/or copolyamide and at least one synthetic water-soluble polymer and at least one inorganic and/or organic filler is extruded or coextruded and the resultant tubing is blown-film processed (non-oriented), mono- or biaxially stretch-oriented.

14. The method as claimed in claim 13, wherein the tubing is then finally processed to form sections tied off at one end or to form a shirred stick.

15. The method as claimed in claim 13, wherein the tubing is then further processed to give a natural-skin-like form, in particular circular skin and fat end.

16. The use of the food casing as claimed in one or more of claims 1 to 12 as artificial sausage casing, preferably for raw sausage varieties.

## Revendications

1. Enveloppe monocouche ou multicouche pour produit alimentaire, constituée d'un mélange thermoplastique contenant au moins un polyamide aliphatique et/ou un copolyamide aliphatique et au moins un ou plusieurs polymères synthétiques hydrosolubles, **caractérisée en ce que** le mélange thermoplastique comprend au moins une charge organique et/ou une charge inorganique, l'enveloppe présentant à l'état non étiré ou à l'état étiré monoaxialement ou biaxialement une perméabilité à la vapeur d'eau de 50 à 1 500 g/m².d, à l'exclusion d'une enveloppe monocouche, orientée biaxialement, ayant une perméabilité à la vapeur d'eau de 40 à 200 g/m².d et comportant une charge organique à base de polysaccharide ou d'exo-polysaccharide ou une charge inorganique à base de poudre de quartz, de dioxyde de titane, de carbonate de calcium, de talc, de mica ou d'un autre aluminosilicate, à base de fibres de verre coupées, d'autres fibres minérales ou de microsphères de verre.

2. Enveloppe pour produit alimentaire selon la revendication 1, **caractérisée en ce que** la perméabilité à la vapeur d'eau de l'enveloppe non étirée ou étirée monoaxialement va de 100 à 1 200 g/m²·d, de préférence de 125 à 1 100 g/m²·d, de façon particulièrement préférée de 150 à 1 000 g/m²·d et celle de l'enveloppe étirée biaxialement va de 100 à 1 200 g/m².d, de préférence de 125 à 1 100 g/m².d, de façon particulièrement préférée de 150 à 1 000 g/m².d.

3. Enveloppe pour produit alimentaire selon la revendication 1 ou 2, **caractérisée en ce que** le polyamide aliphatique et/ou le (co)polyamide aliphatique consiste(nt) en PA-4.6, PA-6, PA-6.6, PA-6/6.6, PA-6.9, PA-6.10, PA-6.12, PA-6/66.9, PA-6/66.12, PA-12 et/ou en un polyamide hétérofonctionnel, de préférence un polyétheramide, un polyesteramide, un polyétheresteramide et/ou un polyétheruréthanne, en particulier un copolyéther-amide, la proportion du polyamide aliphatique et/ou du (co)polyamide aliphatique allant en général de 2 à 99 % en poids, de préférence de 5 à 95 % en poids, de façon particulièrement préférée de 15 à 85 % en poids, chaque fois par rapport au poids total du mélange.

4. Enveloppe pour produit alimentaire selon une ou plusieurs des revendications 1 à 3, **caractérisée en ce que** le polymère synthétique hydrosoluble est un homo- et/ou copolymère comportant des motifs de vinylpyrrolidone, N-vinylalkylamide, alkyloxazoline, alkylglycol, alcool vinylique, éther d'alcool vinylique, ester d'alcool vinylique, acrylamide, oxyde d'alkylène, acide (méth)acrylique, acide maléique et/ou éther de cellulose, dont la proportion va en général de 1 à 50 % en poids, de préférence de 3 à 45 % en poids, de façon particulièrement préférée de 5 à 40 % en poids, chaque fois par rapport au poids total du mélange.

5. Enveloppe pour produit alimentaire selon la revendication 4, **caractérisée en ce que** le polymère synthétique hydrosoluble est un poly(alcool vinylique) ayant une masse moléculaire moyenne M_{w} dans la plage de 10 000 à 50 000 et un degré de saponification des groupes acétate dans la plage de 75 à 98%.

6. Enveloppe pour produit alimentaire selon une ou plusieurs des revendications 1 à 5, **caractérisée en ce que** la charge organique est un glucide, de préférence un polysaccharide naturel et/ou un dérivé de celui-ci, un polysaccharide ramifié ou réticulé et/ou un dérivé de celui-ci, une fibre organique synthétique ou une poudre organique synthétique, de préférence une fibre ou une poudre à base de polymères fluorés, polysulfones, polyéthersulfones, polyéthercétones, poly(sulfure de phénylène)s, polyaramides, polyimides, polyesters aromatiques, polyquinoxalines, polyquinoléines, polybenzimidazoles, polymères de type cristal liquide ou polymères conducteurs, dont la longueur moyenne de fibre ou la taille moyenne de grain va en général de 5 à 3 000 µm, de préférence de 10 à 1 000 µm, de façon particulièrement préférée de 15 à 500 µm.

7. Enveloppe pour produit alimentaire selon une ou plusieurs des revendications 1 à 6, **caractérisée en ce que** la charge a un grand pouvoir de gonflement, une substance contenant des groupes sulfate, carboxylate ou phosphate, une substance contenant des sels d'ammonium quaternaire, un épaississant organique, une substance naturelle organique modifiée, un épaississant inorganique, un épaississant entièrement synthétique ou un superabsorbant à base de polyacrylate ou polyméthacrylate étant préférés.

8. Enveloppe pour produit alimentaire selon une ou plusieurs des revendications 1 à 7, **caractérisée en ce que** la charge inorganique consiste en fibres et/ou billes et/ou poudres de verre, de préférence en fibres de verre, filaments de verre, fibres de verre coupées ; en fibres courtes de laine de roche, en laine de basalte, laine de laitier, fibres de laine minérale ; en carbonates, de préférence craie, poudre de calcaire, calcite, carbonate de calcium précipité, carbonate de magnésium, dolomite et carbonate de baryum ; en sulfates, de préférence sulfate de baryum et sulfate de calcium ; en silicates, de préférence talc, pyrophyllite, chlorite, amphibole, mica, kaolin, wollastonite, poudre de schiste, silicates de Ca, Al, Ca/Al, Na/Al précipités, feldspaths, mullite et zéolithe ; en acides siliciques, de préférence quartz, silice vitreuse, cristobalite, kieselguhr, craie siliceuse de Neuburg, acide silicique précipité, acide silicique pyrogéné, poudre de verre, poudre de pierre ponce, perlite, (micro)billes de verre (billes de verre pleines), billes creuses de silicate d'aluminium et métasilicates de Ca ; en oxydes, de préférence hydroxyde d'aluminium, hydroxyde de magnésium, dioxyde de titane et dioxyde de silicium ou en fibres de carbone, la taille de grain ou la longueur des fibres allant en général de 0,1 à 3 000 µm, de préférence de 1 à 1 500 µm, de façon particulièrement préférée de 5 à 1 000 µm.

9. Enveloppe pour produit alimentaire selon la revendication 8, **caractérisée en ce que** la charge inorganique consiste en microbilles de verre ayant une taille moyenne de grain de 1 à 250 µm, de préférence de 2 à 150 µm.

10. Enveloppe pour produit alimentaire selon la revendication 9, **caractérisée en ce que** la surface des microbilles de verre est modifiée par un promoteur d'adhérence qui améliore l'adhérence aux polymères environnants.

11. Enveloppe pour produit alimentaire selon une ou plusieurs des revendications 1 à 10, **caractérisée en ce que** la proportion de la charge va de 1 à 50 % en poids, de préférence de 2 à 45 % en poids, de façon particulièrement préférée de 3 à 40 % en poids, chaque fois par rapport au poids total du mélange thermoplastique.

12. Enveloppe pour produit alimentaire selon une ou plusieurs des revendications 1 à 11, **caractérisée en ce qu'**elle contient en outre un plastifiant, de préférence du diméthylsulfoxyde, du butane-1,3-diol, du glycérol, de l'eau, de l'éthylèneglycol, du butylèneglycol, du diglycéride, du diglycoléther, du formamide, du N-méthylformamide, du N,N-diméthylformamide, de la N,N-diméthylurée, du N,N-diméthylacétamide, du N-méthylacétamide, du poly(oxyalkylène), du mono-, di- ou triacétate de glycérol, du sorbitol, de l'érythritol, du mannitol, de l'acide gluconique, de l'acide galacturonique, de l'acide glucarique, de l'acide glucuronique, des acides polyhydroxycarboxyliques, du glucose, du fructose, du saccharose, de l'acide citrique, des dérivés d'acide citrique ou du poly(alcool vinylique), la proportion du plastifiant allant jusqu'à 40 % en poids, de préférence de 1 à 35 % en poids, de façon particulièrement préférée de 2 à 30 % en poids, chaque fois par rapport au poids total du mélange thermoplastique.

13. Procédé pour la fabrication d'une enveloppe pour produit alimentaire selon une ou plusieurs des revendications 1 à 12, **caractérisé en ce que** le mélange thermoplastique comportant au moins un polyamide aliphatique et/ou un copolyamide aliphatique et au moins un polymère synthétique hydrosoluble et au moins une charge organique et/ou une charge inorganique est extrudé ou coextrudé et le boyau qui en résulte est moulé par soufflage (non orienté), orienté par étirage mono- ou biaxial.

14. Procédé selon la revendication 13, **caractérisé en ce que** le boyau est ensuite mis sous forme de segments ligaturés d'un côté ou d'une chenille plissée.

15. Procédé selon la revendication 13, **caractérisé en ce que** le boyau est ensuite mis sous une forme ressemblant au boyau naturel, en particulier de boyau en couronne et "Fettende".

16. Utilisation de l'enveloppe pour produit alimentaire selon une ou plusieurs des revendications 1 à 12, en tant qu'enveloppe artificielle pour saucisses, en particulier pour types de saucisses crues.
